# EUROPÄISCHE PATENTANMELDUNG

(11) **EP 1 267 569 A2**
(43) Veröffentlichungstag der Anmeldung: **18.12.2002**
(21) Anmeldenummer: 02008437.2
(22) Anmeldetag: 13.04.2002
(51) Int. Cl.: H04N 5/00

(54) **Endgerät und Verfahren zur Nutzung verschiedener über ein Telekommunikationsnetz angebotener Dienste**

(30) Priorität: 15.06.2001 DE 10128925
(71) Anmelder: Deutsche Telekom AG, 53113 Bonn (DE)
(72) Erfinder: Johann, Jens, Dr., 64347 Griesheim (DE); Miethe, Klaus, Dr., 64285 Darmstadt (DE); Oberndorfer, Wolfgang, 64291 Darmstadt (DE); Schwenk, Jörg, Dr., 91239 Henfenfeld (DE)

(57) **Zusammenfassung**

Ein Endgerät zur Nutzung verschiedener über ein Telekommunikationsnetz angebotener Dienste, beispielsweise Fernsehprogramme einschließlich aller Varianten wie Pay-TV und interaktivem Fernsehen und Internet-Anwendungen, umfaßt mindestens eine Empfangseinrichtung für Bild- und Toninformationen, mindestens eine Sendeeinrichtung für Daten, welche zur Auswahl der empfangenen Bild- und Toninformationen dienen, eine Eingabeeinrichtung, einen Decoder für die Bild- und Toninformationen und Ausgänge für Audio- und Videosignale. Ein Server für derartige Endgeräte enthält Einrichtungen zur Verbindung mit einem Telekommunikationsnetz, Einrichtungen zur Berechtigungsprüfung anhand der jeweils von einem Endgerät empfangenen Daten und Einrichtungen zur Entgegennahme und Verarbeitung von Diensteanforderungen der Endgeräte.

## Beschreibung

Die Erfindung betrifft ein Endgerät und ein Verfahren zur Nutzung verschiedener über ein Telekommunikationsnetz angebotener Dienste.

Der heutige Entwicklungsstand und die heutigen Entwicklungstendenzen sind gekennzeichnet durch einen hohen Aufwand für Endgeräte beim Benutzer. So werden als Arbeitsplatzsysteme meist Personalcomputer verwendet mit Betriebssystemen und diversen Programmen (Anwendungen) und entsprechend hohem Hardware-Aufwand. In der Unterhaltungstechnik werden Fernsehen und Rundfunk durch ebenfalls aufwendige Geräte ergänzt, wie beispielsweise Set-Top-Box, D-Box, Home-Infotainment-Center und Multimedia-Home-Platform.

Personalcomputer sind hochentwickelte Rechnersysteme, auf denen die meisten Anwendungen lokal ausgeführt werden. Im Bereich der Bürokommunikation sind die meisten Personalcomputer mit einem Netzwerk verbunden, haben zum Teil Zugang zum Internet und können Anwendungen von Servern meist mit einer entsprechenden Client-Software benutzen.

Set-Top-Boxen basieren auf Rechnersystemen mit einem oder mehreren Prozessoren, einem Betriebssystem sowie in den meisten Fällen einer Java-Schicht, die das Einbinden verschiedener Dienste über ein MHP-konformes API (Application Programming Interface) erlaubt. Dem Benutzer des Gerätes werden Anwendungen über verschiedene Datenkanäle bereitgestellt und laufen lokal auf der Set-Top-Box. Sie erlauben die Darstellung einer Reihe von Diensten auf dem Display des Kunden - im allgemeinen auf dem Fernsehbildschirm. Als wichtige Dienste/Anwendungen werden zur Zeit Enhanced TV, Interactive TV, Internet-Browsing und E-Mail genannt. Die Bereitstellung solcher Dienste in einer Set-Top-Box erfordert einen erheblichen Entwicklungsaufwand sowohl im Bereich der Hardware als auch der Software.

An Geräte dieser Art werden noch weitere Anforderungen gestellt, beispielsweise die Flexibilität des Systems, insbesondere die Realisierung neuer Dienste durch Software-Download über einen der Datenkanäle, Sicherheit der angebotenen Inhalte vor mißbräuchlicher Benutzung und Verbreitung und geringe Kosten für das Endgerät zur preiswerten Einführung der Dienste. Sofern die Flexibilität nicht durch Software-Downloads gewährleistet werden kann, sondern von der Hardware der Geräte abhängt, tritt das Problem des Veraltens der Geräte auf.

Aufgabe der vorliegenden Erfindung ist es, die Nutzung verschiedener Dienste und gegebenfalls auch Rechenanwendungen unter Wahrung eines Höchstmaßes an Flexibilität kostengünstig zu ermöglichen.

Diese Aufgabe wird bei dem erfindungsgemäßen Endgerät gelöst durch:
- mindestens eine Empfangseinrichtung für Bild- und Toninformationen (Standbild, Audio, Video);
- mindestens eine Sendeeinrichtung für Daten, welche zur Auswahl der empfangenen Bild- und Toninformationen dienen,
- eine Eingabeeinrichtung,
- einen Decoder für die Bild- und Toninformationen und
- Ausgänge für Audio- und Videosignale.

Bei einer Realisierung können dabei vorhandene Decoder (z.B. der Videotextdecoder eines Fernsehgerätes) unterstützt und genutzt werden.

Mit Hilfe des erfindungsgemäßen Endgerätes werden alle einem Wandel unterliegenden Funktionen in vergleichsweise wenige Server verlegt, die über das Telekommunikationsnetz erreicht werden können. Die audio-visuelle Ausgabe jeder Anwendung kann auf jedes Endgerät angepaßt und dargestellt werden. Das erfindungsgemäße Endgerät läßt sich als hardware-basierte Lösung mit verminderter Software-Unterstützung realisieren. Dies erlaubt eine hohe Integration und damit eine kostengünstige Fertigung. Der Hardware-Aufwand liegt deutlich unterhalb desjenigen für eine herkömmliche Set-Top-Box oder einen PC. Für Software im Bereich des erfindungsgemäßen Endgerätes entstehen nur geringe Kosten.

Unter Dienste werden in diesem Zusammenhang alle über das Telekommunikationsnetz zu erbringende Dienste bezeichnet, insbesondere die zur Verfügungstellung von Bild- und Toninformationen, wie Fernsehen einschließlich Begleitton, Ton-Rundfunk oder stehende Bilder, wie sie bei diversen Computeranwendungen bekannt sind. Der Begriff Anwendung wird im folgenden im Sinne eines Computer-Anwendungsprogramms benutzt. So kann beispielsweise eine Anwendung auf einem über das Telekommunikationsnetz erreichbaren Server laufen, während die Nutzung dieser Anwendung mit dem erfindungsgemäßen Endgerät erfolgt. So kann der Benutzer beispielsweise ein auf dem Server befindliches Textverarbeitungsprogramm wie auf dem heimischen PC nutzen. Voraussetzung dafür ist allerdings eine schnelle Datenübertragung, insbesondere in Richtung vom Server zum erfindungsgemäßen Endgerät. Eine solche wird jedoch insbesondere durch Verfahren mit hoher Datenübertragungsrate, wie beispielsweise VDSL, ermöglicht.

Um die über das Telekommunikationsnetz auszutauschenden Daten vor Ausspähung und die Dienste und Anwendungen gegen nicht autorisierte Nutzung zu sichern, ist bei einer Weiterbildung des erfindungsgemäßen Endgerätes ein Lesegerät für bewegliche Datenträger, insbesondere zur Eingabe von Sicherheitscodes, vorgesehen. Als Datenträger eignen sich vorzugsweise Chipkarten.

Für Sicherheitszwecke kann auch eine Erkennungseinrichtung für Sicherheitsmerkmale, insbesondere Fingerabdruck oder Irisbild, vorgesehen sein.

Eine andere Weiterbildung dient zum Schutz von Daten dadurch, daß die Empfangseinrichtung eine Entschlüsselungseinrichtung und die Sendeeinrichtung eine Verschlüsselungseinrichtung enthält.

Eine vorteilhafte Ausgestaltung des erfindungsgemäßen Endgerätes besteht darin, daß der Decoder für die Bild- und Toninformationen der Entschlüsselungseinrichtung nachgeschaltet ist und daß ferner zusammen mit den Bild- und Toninformationen übertragene Programm- und Steuerinformationen auswertbar sind. Durch diese zusätzlichen Informationen kann beispielsweise der Decoder auf den jeweiligen Verwendungszweck (Computer- oder Fernsehen) eingestellt werden. Sind über das Telekommunikationsnetz geeignete Server erreichbar, so genügt der Anschluß eines Fernseh- oder Computer-Monitors sowie geeignete Lautsprecher an die Ausgänge für Audio- und Videosignale sowie die Verwendung entsprechender Eingabeeinrichtungen, um das erfindungsgemäße Endgerät zusammen mit den über das Telekommunikationsnetz in Anspruch genommenen Diensten.

Manche Verwendungszwecke des erfindungsgemäßen Endgerätes lassen sich nur mit der Decodierung empfangener Bild- und Toninformationen und dem Senden von Eingabedaten nicht erfüllen. Deshalb ist bei einer anderen Weiterbildung eine Schnittstelle (Interface) zum Anschluß mindestens eines Zusatzgerätes vorgesehen, wobei die Schnittstelle Daten aus dem Decoder und dem Leser empfangen und Daten an die Sendeeinrichtung und an einen im Weg der decodierten Bild- und Toninformationen liegenden Mischer senden kann.

Je nach der gerade ausgeübten Funktionalität des Endgerätes und gegebenenfalls des Zusatzgerätes können die darin erzeugten und verarbeiteten Daten recht verschieden sein. Um eine geordnete Weiterleitung von Daten nach außen, das heißt über die Sendeeinrichtung in das Telekommunikationsnetz und über die Schnittstelle, sicherzustellen, ist bei einer anderen Weiterbildung der Erfindung vorgesehen, daß eine von dem Decoder und der Eingabeeinrichtung steuerbare Filteranordnung vorgesehen ist, die mit der Schnittstelle, dem Decoder und mit der Sendeeinrichtung verbunden ist.

Das erfindungsgemäße Endgerät kann auch dadurch weitergebildet werden, daß ein Ringspeicher zur Wiederholung von Video- und/oder Audiosequenzen vorgesehen ist.

Eine vorteilhafte Ausgestaltung des erfindungsgemäßen Endgerätes besteht darin, daß die Eingabeeinrichtung Anschlüsse für verschiedene Eingabegeräte, insbesondere eine Tastatur, ein Zeigegerät oder ein Mikrofon zur Sprachsteuerung, aufweist. Bei einer Anwendung als Personalcomputer kommt hier insbesondere eine Computertastatur und eine Maus in Frage. Für eine typische Fernsehanwendung kann jedoch alternativ oder zusätzlich vorgesehen sein, daß die Eingabeeinrichtung einen Infrarot- oder Funkempfänger aufweist.

Eine Anwendung als sogenanntes Fernsehtelefon ist dadurch möglich, daß das Zusatzgerät je einen Coder und Eingänge für Video- und für Audiosignale aufweist.

Die Möglichkeit, Bild- und Toninformationen zu empfangen, schließt den Empfang von Fernsehsignalen von terrestrischen Sendern, Satelliten oder über Kabel unter Mitwirkung des erfindungsgemäßen Endgerätes nicht aus. Dazu ist bei einer anderen Weiterbildung vorgesehen, daß das Zusatzgerät im wesentlichen einen Empfangsteil für Fernseh-Rundfunk, eine Entschlüsselungseinrichtung und einen Decoder enthält.

Auch bei der Verwendung eines Zusatzgerätes kann ein Berechtigungsnachweis mit einer Chipkarte vorteilhaft sein. Deshalb ist bei einer anderen vorteilhaften Ausgestaltung vorgesehen, daß das Zusatzgerät einen weiteren Leser für Datenträger, insbesondere einen Chipkarten-Leser, enthält.

Um das Endgerät an verschiedene Codes bei Übertragung der Bild- und Toninformationen jeweils anpassen zu können, ohne daß im Decoder eine Vielzahl von Algorithmen vorzuhalten ist, ist bei einer Weiterbildung der Erfindung vorgesehen, daß über die Empfangseinrichtung Daten empfangbar sind, welche Algorithmen zur Decodierung der Bild- und Toninformationen enthalten und die in dem Endgerät mindestens flüchtig gespeichert werden und in dem Decoder zur Decodierung der darauffolgend erhaltenen Bild- und Toninformationen anwendbar sind. Je nach Umfang dieser Algorithmen und Übertragungsgeschwindigkeit der betreffenden Daten zum Endgerät kann dabei eine flüchtige Speicherung vorgesehen sein, so daß jeweils nach der Aufnahme eines Dienstes bzw. nach dem Einschalten des erfindungsgemäßen Endgerätes die Algorithmen enthaltenen Daten vor den zu decodierenden und audiovisuell darzustellenden Daten zu übertragen sind.

Bei einem größeren Umfang dieser Daten des Codierungsalgorithmus und einer im Verhältnis dazu geringen Übertragungsrate kann auch der Fachmann die nichtflüchtige Speicherung vorsehen, so daß nicht nach jedem Einschalten oder Wechsel eines Dienstes eine Übertragung der Decodierinformation erforderlich ist.

Das erfindungsgemäße Endgerät kann auch im Zusammenhang mit dem Mobilfunk eingesetzt werden, wozu gemäß einer vorteilhaften Ausgestaltung vorgesehen ist, daß es in ein Mobiltelefon integriert ist und daß die Videosignale dem Display des Mobiltelefons zuführbar sind und die Eingabeeinrichtung mit der Eingabeeinrichtung des Mobiltelefons verbunden ist. Diese Ausgestaltung kann insbesondere in breitbandigen Mobilfunknetzen, beispielsweise UMTS, genutzt werden.

Das erfindungsgemäße Endgerät kann in einen Fernsehempfänger oder in einen Videomonitor integriert sein. Die Verbindung mit dem Telekommunikationsnetz kann außer einer festverlegten Leitung aus einer Funkverbindung bestehen. Dadurch ist ein mobiler Einsatz des erfindungsgemäßen Endgerätes möglich, beispielsweise in Fahrzeugen. Das erfindungsgemäße Endgerät kann auch in Kiosksystemen verwendet werden, die einen öffentlichen Zugang zu verschiedenen Diensten bieten.

Um in einem netzseitigen Server den Aufwand zur Zusammenfügung mehrerer Bild- und Toninformationen zu sparen, wenn mehrere Bilder oder Tonereignisse mit Hilfe des Endgerätes wiedergegeben werden sollen, kann das Endgerät einen Bild- und/oder Tonmischer enthalten, der die empfangenen Bild- und/oder Toninformationen mehrerer Bilder und/oder Tonereignisse zusammenfügt.

Vorzugsweise ist dabei vorgesehen, daß Prioritäten beim Zusammenfügen der Bilder und/oder Tonereignisse durch mit den Bildern und/oder Tonereignisse empfangene Daten gesteuert werden oder daß ferner die Prioritäten und die Darstellung der Bilder und/oder Tonereignisse von Bedieneingaben am Endgerät abhängig sind.

Ein für erfindungsgemäße Endgeräte geeigneter Server umfaßt
- Einrichtungen zur Verbindung mit einem Telekommunikationsnetz,
- Einrichtungen zur Berechtigungsprüfung anhand der jeweils von einem Endgerät empfangenen Daten und
- Einrichtungen zur Entgegennahme und Verarbeitung von Diensteanforderungen der Endgeräte.

Soweit Daten für mit Hilfe des Endgerätes darzustellende Bilder und/oder Tonereignisse in Anwendungsservern abgelegt sind, ist beim erfindungsgemäßen Server vorgesehen, daß ferner Einrichtungen zur Weiterleitung von Diensteanforderungen an mindestens einen Anwendungsserver und Einrichtungen zur Weiterleitung von Daten des mindestens einen Anwendungsservers an Endgeräte vorgesehen sind.

Eine weitere vorteilhafte Ausgestaltung des erfindungsgemäßen Servers besteht darin, daß er eine Fernsteuerung (An/Aus-Schalten, Datenaustausch) von Zusatzmodulen an Endgeräten nach einem der Ansprüche 6 bis 20 erlaubt.

Ausführungsbeispiele der Erfindung sind in der Zeichnung anhand mehrerer Figuren dargestellt und in der nachfolgenden Beschreibung näher erläutert. Es zeigt:
- Fig. 1: ein erstes Ausführungsbeispiel,
- Fig. 2: ein zweites Ausführungsbeispiel,
- Fig. 3: das zweite Ausführungsbeispiel mit einem Zusatzgerät, das die Verwendung des Endgerätes als Fernsehtelefon ermöglicht,
- Fig. 4: das zweite Ausführungsbeispiel mit einem Zusatzgerät zum Empfang von Fernsehsendungen,
- Fig. 5: das erste Ausführungsbeispiel in einer Konfiguration als Fernsehgerät,
- Fig. 6: das erste Ausführungsbeispiel in einer Konfiguration als Arbeitsplatzsystem,
- Fig. 7: das erste Ausführungsbeispiel in ein Mobiltelefon integriert,
- Fig. 8: ein Ausführungsbeispiel für einen mit dem Telekommunikationsnetz verbundenen Server,
- Fig. 9: die Zusammensetzung eines Bildes aus mehreren dem Mini-Decoder zugeführten Bildinformationen und
- Fig. 10: Mini-Decoder an einem Hausnetz.

Gleiche Teile sind in den Figuren mit gleichen Bezugszeichen versehen. Die Figuren sind stark vereinfachte Blockschaltbilder mit den wesentlichen Funktionseinheiten. Ein- und Ausgänge, sowie Verbindungslinien sind unabhängig davon, ob es sich gegebenenfalls um mehrere parallele Leitungen handelt in Form von einfachen Linien bzw. Kreisen dargestellt. Ein erfindungsgemäßes Endgerät wird im folgenden auch als Mini-Decoder bezeichnet.

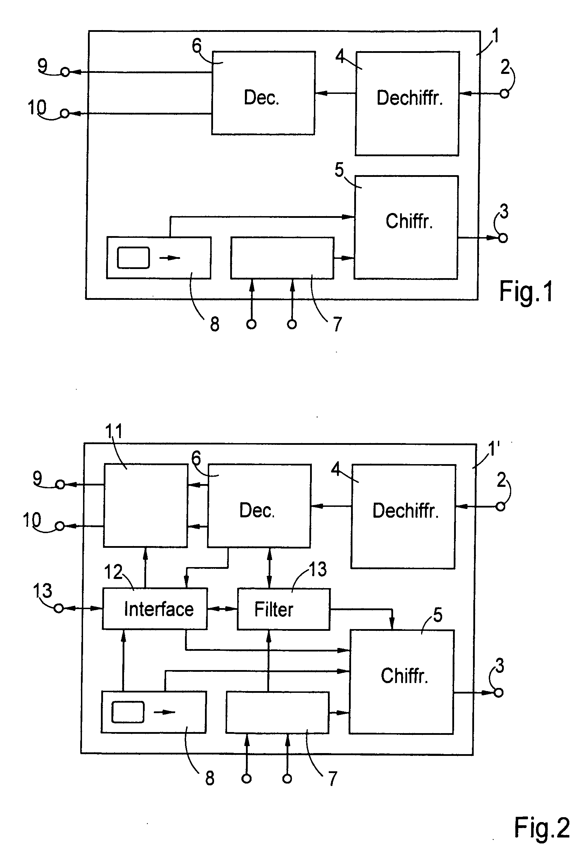

Das Endgerät 1 gemäß Fig. 1 weist einen Eingang 2 und einen Ausgang 3 zur Verbindung mit einem nicht dargestellten Telekommunikationsnetz auf. Dazu kann beispielsweise eine digitale Anschlußleitung (wie beispielsweise ADSL oder VDSL, DSL = Digital Subscriber Line) mit geeigneten Netzabschlußeinheiten und Modems dienen. Der bei 2 eintreffende Datenstrom wird bei 4 entschlüsselt, während zur Verschlüsselung des über den Ausgang 3 zum Netz übertragenen Datenstroms eine Verschlüsselungseinrichtung 5 vorgesehen ist. An den Ausgang der Entschlüsselungseinrichtung 4 ist ein Decoder 6 zur Decodierung der Bild- und Toninformationen angeschlossen, an dessen Ausgängen 9 und 10 Video- und Audiosignale anstehen, die dann über entsprechende Wiedergabegeräte - Lautsprecher und Monitore - hör- bzw. sichtbar gemacht werden können.

Wird auf eine Verschlüsselung der zu übertragenden Information verzichtet, so reduzieren sich die Funktionalitäten des Decoders auf das Empfangen der unverschlüsselten Nachrichten und die des Encoders auf das Senden der unverschlüsselten Nachrichten. Eine Nutzung von unverschlüsselter Datenübertragung ist nicht zwingend zur Realisierung eines Mini-Decoders und eines von ihm genutzten Dienstes. Der Betreiber des Netzes und des Servers hat dann andere Vorkehrungsmaßnahmen für Dienste und Inhalte zu treffen, deren Daten auf Grund gesetzlicher Vorschriften oder auf Verlangen des Anwenders oder auf Verlangen des Inhalteanbieters vor mißbräuchlicher Nutzung durch Dritte geschützt werden sollen.

An Eingänge der Verschlüsselungseinrichtung 5 sind eine Eingabeeinrichtung 7 und ein Chipkartenleser 8 angeschlossen. Die Eingabeeinrichtung 7, die im Ausführungsbeispiel nach Fig. 1 nicht näher ausgeführt ist, kann vorzugsweise als Schnittstelle für verschiedene anzuschließende Eingabegeräte ausgebildet sein - wie Tastatur, Maus, Fernbedienung, Mikrofon zur Sprachsteuerung und ähnliches.

Zur Nutzung des Mini-Decoders wird die Verbindung zum Server über das Telekommunikationsnetz durch Einschieben einer Chipkarte in den Chipkartenleser 8 aktiviert. Die Anmeldung beim Server wird im Mini-Decoder verschlüsselt und zum Server gesendet. Daraufhin prüft der Server die Echtheit der Chipkarte und die Verbindungswege. Andere Möglichkeiten einer Identifikation des Nutzers können alternativ oder zusätzlich zum Chipkartenleser eingebaut werden, z.B. Fingerabdruckleser oder Irisscanner.

Fällt die Prüfung positiv aus, beantwortet der Server die Anmeldung und sendet die ersten Daten, die einem Bild auf einem am Mini-Decoder angeschlossenen Display entsprechen. Dabei kann eine zusätzliche Identifizierung des Benutzers erfragt werden, beispielsweise ein Paßwort (PIN), wodurch die Benutzung einer verlorenen oder gestohlenen Karte verhindert wird.

Gegebenenfalls nach der Prüfung der zusätzlichen Identifikation werden dem Mini-Decoder weitere Daten gesendet, die ein Auswahlmenü für die zur Verfügung stehenden Dienste darstellen. Die Gestaltung dieses Bildinhalts und des Inhalts (Basisangebot) kann individuell und zeitlich aktuell auf den Bildbenutzer angepaßt sein. Das mögliche Spektrum des Basisangebots richtet sich hierbei auch nach der Bandbreite der Kommunikationswege vom und zum Server. So hat es beispielsweise keinen Sinn, einem Mini-Decoder, der mit dem Telekommunikationsnetz und damit mit dem Server über eine schmalbandige Leitung verbunden ist, ein Fernsehprogramm anzubieten. Bei breitbandigen Leitungen ist dies jedoch durchaus möglich.

Wählt der Benutzer aus dem Angebot einen Dienst bzw. eine Anwendung aus, wird diese Nachricht verschlüsselt zum Server übertragen. Vom Server wird dann eine entsprechende Anwendung gestartet. Eine solche Anwendung kann auf dem Server oder auf einem weiteren Server installiert sein. Dieser wird im folgenden Anwendungs-Server genannt, wenn es zur Unterscheidung von dem Mini-Decoder bedienenden Mini-Decoder-Server erforderlich ist. Da die Verteilung der Aufgaben auf die Server von den jeweiligen technischen, rechtlichen und wirtschaftlichen Voraussetzungen abhängt, wird bei der Erläuterung der Ausführungsbeispiele des Mini-Decoders nur auf einen Server Bezug genommen.

Der Benutzer hat jederzeit die Möglichkeit, mit einem einfachen Kommando, beispielsweise mit einem Tastendruck, eine bestimmte Anwendung bzw. einen bestimmten Dienst zu beenden. Das Programm des Servers der gerade laufenden Anwendung schaltet sich direkt ab und dem Benutzer wird das Basisangebot zur Auswahl angeboten. Oder das Programm antwortet mit Hinweisen, beispielsweise, daß Daten bei Abbruch verlorengehen, und/oder mit der Frage nach Zwischenspeicherung des aktuellen Zustands. Ein zweites Drücken einer Abbruchtaste durch den Benutzer führt dann auf jeden Fall zu einem Beenden der Anwendung durch den Server, worauf der Benutzer wieder das Basisangebot erhält.

Auch auf der Darstellung des Basisangebots ist die Möglichkeit des Abbruchs der Verbindung zum Server vorgesehen, so daß der Benutzer per Eingabe die Verbindung abbrechen kann. Außerdem führt das Entfernen der Chipkarte zu einem Abbruch der Verbindung.

Vorzugsweise kann bei der Erfindung auch vorgesehen sein, daß die Verbindung zum Mini-Decoder und dessen Funktion laufend durch Testsignale geprüft wird und daß bei Ausbleiben einer Antwort - das heißt, bei Ausfall des Mini-Decoders oder der Verbindung - der Server oder der Anwendungs-Server das Programm unter Speicherung des bestehenden Zustandes beendet.

Sofern Dienste bzw. Anwendungen nicht unmittelbar vom Server oder dessen Betreiber zur Verfügung gestellt werden, sondern über einen Anwendungs-Server erbracht werden, kann der codierte Bild- und Tondatenstrom vom Inhalt der Anbieter ohne inhaltlichen Eingriff zum Endgerät durchgereicht werden und dort sichtbar bzw. hörbar gemacht werden. Dieses Verfahren ermöglicht eine klare Trennung zwischen den Inhalten, für die der Programmanbieter verantwortlich ist, und der Übertragung zum Endgerät, für die der Server- und Netzbetreiber Verantwortung trägt. Dabei kann die Verschlüsselung bereits beim Programmanbieter oder beim Server- und Netzbetreiber erfolgen.

Einem Anbieter, der Kundenentgelt für seine Inhalte verlangt, kann mit dem erfindungsgemäßen Verfahren ein hohes Maß an Sicherheit garantiert werden. Er kann zusätzlich die Nutzung seiner Inhalte überwachen, wobei der Server- und Netzbetreiber und der Anbieter ein Abrechnungsverfahren auszuwählen haben, das den jeweiligen gesetzlichen Anforderungen an den Datenschutz genügt. Das Erstellen und Vertreiben von Raubkopien durch Aufzeichnung der Daten am Videoausgang kann der Anbieter durch sogenannte unsichtbare Wasserzeichen im Videosignal erschweren, welche ein Zurückverfolgen auf die Quelle der Aufzeichnung ermöglichen.

Gegenüber dem Ausführungsbeispiel nach Fig. 1 weist das Ausführungsbeispiel gemäß Fig. 2 eine Schnittstelle 12 auf, die zur Steuerung von und zur Kommunikation mit anderen Geräten - im folgenden Zusatzgeräte oder -module genannt - dient. Die Zusatzgeräte können über einen geeigneten Anschluß 13 mit dem Mini-Decoder verbunden werden. Dadurch kann die Funktionalität des Mini-Decoders erheblich erweitert werden. Unter anderem können über die Schnittstelle 12 Video- und Audiosignale empfangen werden, die mit Hilfe eines Mischers 11 über die Ausgänge 9 und 10 den darin angeschlossenen Ton- und Bildwiedergabeeinrichtungen zugeführt werden.

Die in den Chipkartenleser 8 eingeführte Chipkarte kann dabei auch zur Berechtigung der Nutzung eines Zusatzmoduls verwendet werden. Informationen zur Steuerung der Anwendung und Daten für die Anwendung auf dem Server werden vom Zusatzgerät über das Interface 12 der Verschlüsselungseinrichtung 5 zugeführt und verschlüsselt über den Ausgang 3 und das Telekommunikationsnetz zum Server geleitet. Steuerungsinformationen und Daten des Servers, die für das Zusatzmodul bestimmt sind, werden nach der Entschlüsselung bei 2 und der Decodierung bei 6 über das Interface 12 dem Zusatzgerät zugeführt.

Ein Filter 13 für die Eingaben des Nutzers erlaubt direkt Befehle an das Zusatzgerät abzusenden. Die Filterfunktion wird dabei über den Server eingestellt. Daten des Zusatzgerätes zur Anzeige auf dem Display werden über den Mischer 11 geleitet. Im Mischer können Video- und Tonsignale überlagert werden, wobei Lage, Größe der Fenster und die Reihenfolge (Vordergrund/Hintergrund) für Bilder vom Server gesteuert werden können. Die Nutzung von Transparenz in beiden Videoquellen erlaubt dabei komplexe Verteilungen der Display-Fläche auf die beiden zu mischenden Quellen. Angeschlossene Zusatzgeräte melden sich beim Start der Verbindung beim Server an.

Die Funktionalität des Filters und des Mischers kann auch in einer Realisierung des Mini-Decoders ohne Interface 12 genutzt werden, z.B. zur Darstellung der Position eines Mauszeigers. Dabei werden die Daten der Endposition durch Klicken definiert und erst dann werden Daten über die durchgeführte Mausbewegung zum Anwendungsserver übertragen. Dabei kann die Anwendung dem Mini-Decoder mitteilen, ob nur die augenblickliche Position des Mauszeigers oder zusätzlich auch der Weg der Mausbewegung über den Filter und den Mischer dargestellt werden und erst nach Beenden der Aktion durch Klicken zur Anwendung geschickt werden (z.B. bei freihändigem Malen in einer entsprechenden Rechneranwendung). Die Anwendung kann dem Mini-Decoder mitteilen, ob sie nur die Endposition oder auch Daten über den zurückgelegten Weg der Mausbewegung erhalten möchte. Diese Funktionalität erlaubt schnellere Navigation einer Position auf einem Bildschirm bei stark reduzierter Kommunikation mit dem Server.

Art und Umfang der Zusatzgeräte, die wie auch der Mini-Decoder selbst als Module ausgestaltet sein können, richten sich nach technischen Gegebenheiten, wie beispielsweise die Art und die Leistungsfähigkeit der Verbindung zum Server und nach Wünschen des Benutzers. Eine universelle Schnittstelle für die Zusatzgeräte erlaubt dabei individuelle kostengünstige Lösungen, die der technischen Entwicklung angepaßt werden können. Die Schnittstelle wird dabei entweder durch die Zusatzgeräte durchgeschleift oder im Gehäuse des Mini-Decoders, das mehrere solcher Zusatzmodule aufnehmen kann, als Bus für alle möglichen Steckplätze vorrätig gehalten.

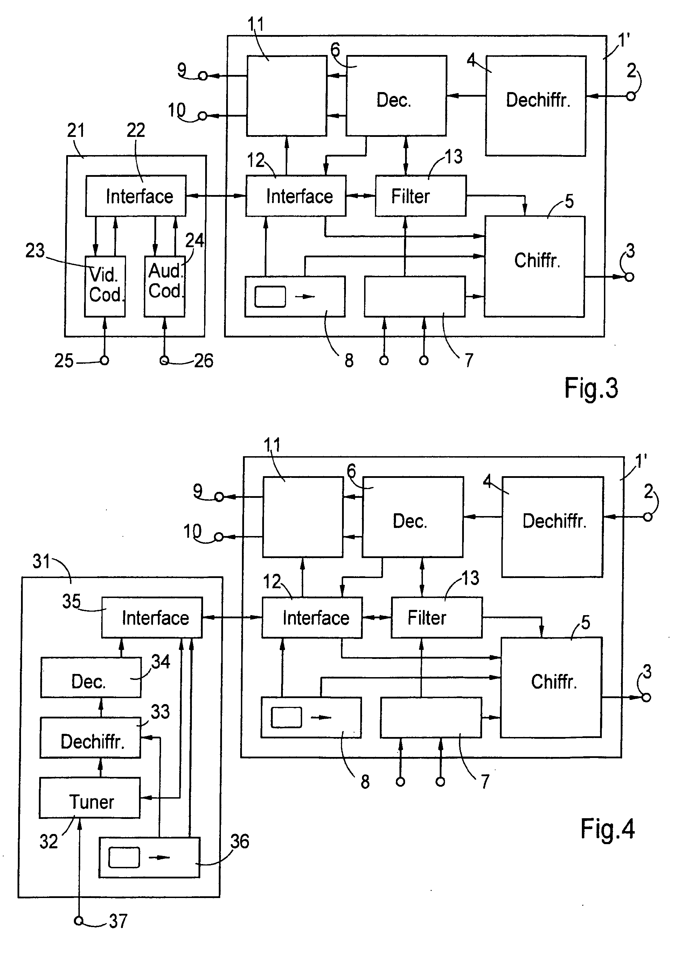

Fig. 3 zeigt den Mini-Decoder nach Fig. 2 mit einem Zusatzmodul, das Telefonieren mit Bild und Ton über den Mini-Decoder und den Server ermöglicht. Das Zusatzmodul 21 enthält eine der Schnittstelle 12 entsprechende Schnittstelle 22, sowie je einen Coder 23, 24 für Video- und Audiosignale, die über Anschlüsse 25, 26 von einer nicht dargestellten Kamera und einem Mikrofon zugeführt werden können. Die codierten Audio- und Videosignale werden über den Mini-Decoder zum Server und von dort aus weiter zu einer Gegenstelle gesendet. Außerdem können die Audio- und Videosignale über den Mischer 11 zu den Ausgängen 9 und 10 geleitet und somit lokal genutzt werden als eigenes Bild und Ton (Lauthören). Steuersignale können sowohl vom Server als auch vom Benutzer (über den Filter, beispielsweise für lauter oder leiser) verarbeitet werden. Auch Informationen des Chipkartenlesers können verwendet werden, beispielsweise zur Unterscheidung, ob der Benutzer den Mini-Decoder lokal aktiviert hat oder ob er außer Haus ist und die Videokamera beispielsweise zur Raumüberwachung nutzen will.

Fig. 4 zeigt ein weiteres Zusatzmodul zum Empfang von verschlüsselten digitalen Fernsehsignalen im Zusammenhang mit dem Mini-Decoder, wobei die Fernsehsignale über andere Wege, beispielsweise Kabel, Satellit, terrestrischer Sender, empfangen werden. Dazu enthält das Zusatzmodul 31 einen Empfangsteil 32 (Tuner), von dem die empfangenen Fernsehsignale einer Entschlüsselungseinrichtung 33 und von dieser über einen Decoder 34 einer Schnittstelle 35 zugeleitet werden. Ein Eingang 37 ist zur Verbindung mit einer Empfangsantenne oder einem Breitbandkabel vorgesehen.

Über die Schnittstelle 12 des Mini-Decoders 1' den Mischer und die Ausgänge 9 und 10 können die empfangenen und decodierten Videosignale einschließlich der dazugehörigen Audiosignale wiedergegeben werden. Das im folgenden TV-Modul genannte Zusatzmodul 31 kann mit verschiedenen Eingangsbausteinen zur Anpassung an das zu empfangene Signal versehen werden. Zum Empfang von unverschlüsselten analogen Fernsehsignalen kann auch auf den Chipkartenleser und die Entschlüsselungs- und die Codiereinrichtungen 33, 34 (Pay-TV) verzichtet werden.

Bereits mit einem solchen einfachen TV-Modul und dem Mini-Decoder lassen sich eine Reihe von Interaktionsmöglichkeiten und Zusatzinformationen realisieren. So besteht beispielsweise die Möglichkeit einer Mischung der Signale des Servers mit den empfangenen Fernsehsignalen, wodurch die Anbieter von Programmen einen hohen Gestaltungsspielraum erhalten. Die Wahl des zu empfangenen Kanals kann direkt vom Benutzer oder über den Server erfolgen. Ein Chipkartenleser 36 im TV-Modul erlaubt mit der Entschlüsselungseinrichtung 33 die Anwendung bestehender Zugangskontrollen.

Da der Server den jeweils gewählten Kanal kennt, läßt sich das Verbraucherverhalten (Zuschauerquoten, wechselnder Kanäle usw.) erfassen. Hier müssen die einschlägigen gesetzlichen Vorschriften des Datenschutzes durch den Betreiber des Servers beachtet werden.

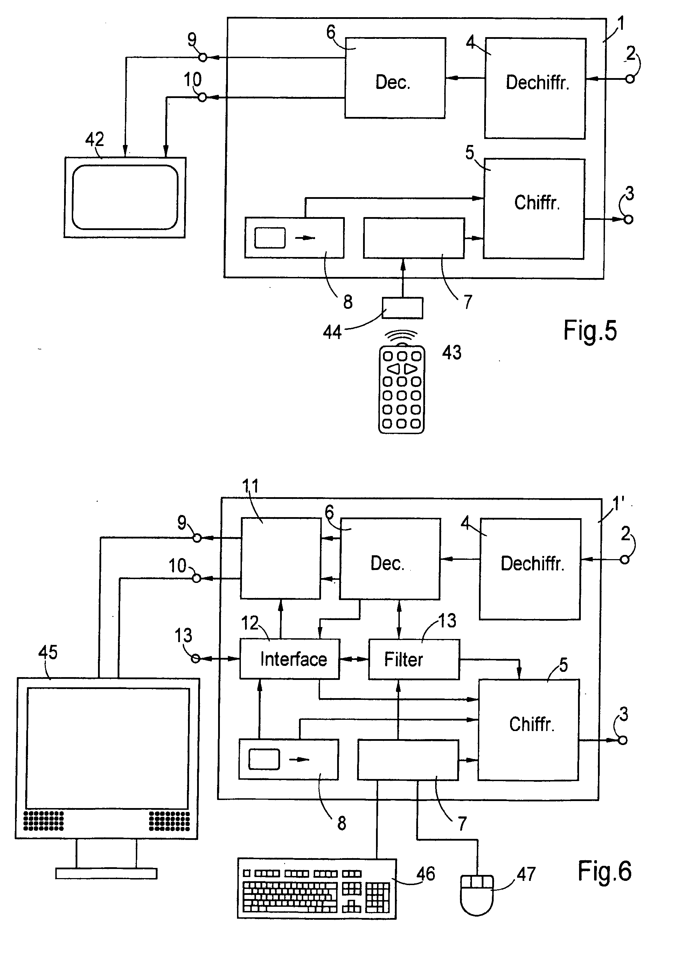

Fig. 5 zeigt ein Beispiel des Einsatzes des Mini-Decoders 1 gemäß Fig. 1 als Vorschaltgerät (Set-Top-Box) für ein Fernsehgerät 42. Der Schwerpunkt der genutzten Anwendungen bzw. Dienste liegt dabei auf dem Gebiet der Unterhaltung. Unter der Voraussetzung eines breitbandigen Kanals zum Server, der beispielsweise mit einer XDSL-Technik über Telefonleitungen möglich ist, läßt sich ein Fernsehgerät mit Video- und Audiosignalen versorgen, die eine Videodarstellung in voller Bildschirmbreite sowie Bildschirminhalte aufgeteilt in Videofelder und Textbereiche ermöglichen. Anstelle des üblichen Fernsehgerätes 42 kann auch ein Videomonitor und eine Lautsprecheranlage angeschlossen werden. Die Steuerung des Mini-Decoders 1 erfolgt mit einer entsprechenden Fernbedienung 43, wozu die Eingabeeinrichtung 7 mit einem Fernbedienungsempfänger versehen ist.

Mit der in Fig. 5 dargestellten Konfiguration lassen sich folgende Anwendungen ausführen:
a) Fernsehprogramme mit oder ohne zusätzliche Interaktionsmöglichkeiten durch den Benutzer. Diese Begleitinformation und das vom Benutzer zu steuernde Programm, wie beispielsweise Mitratemöglichkeiten bei einem Quiz, werden vom Sender des betreffenden Programms über einen Anwendungsserver bereitgestellt.
b) Audio- und Videoinhalte werden nach einer entsprechenden Eingabe von einem Applikationsserver (Video on Demand) geliefert.
c) Speicherung von Audio- und Videoinhalten auf Kundenwunsch auf einem Anwendungsserver (Storage Server).
d) Wiederholung eines bestimmten Zeitabschnitts der aktuellen Sendung (Instant Replay), beispielsweise Wiederholung eines Tores bei einer Fußballübertragung, auf Kundenwunsch; die Speicherung des Inhalts, der wiederholt werden kann, erfolgt entweder auf einem jeweiligen Anwendungsserver, auf dem Mini-Decoder-Server oder auf einem Speicher des Mini-Decoders (beschränkte Zeit, Ringbuffer).
e) Internetzugang, die Inhalte werden dabei so bereit gestellt, wie vom Betreiber der jeweiligen Webseite vorgesehen.
f) E-Mail.
g) Anbieten von Rechnerprogrammen (Anwendungen), wie beispielsweise Spiele, Lernprogramme, Textverarbeitung; jedes Programm mit einer grafischen Benutzeroberfläche oder alpha-numerischer Ausgabe kann hierbei dem Benutzer angeboten werden. Es läuft auf einem Anwendungsserver des jeweiligen Anbieters.

In der in Fig. 5 dargestellten Konfiguration ist die Eingabe von Kommandos auf die Fernbedienung begrenzt. Soll der Mini-Decoder in einem Arbeitsplatzsystem mit Standardbüro-Anwendungen, wie Textverarbeitung, Tabellenkalkulation und ähnlichem, verwendet werden, kommt eine Konfiguration nach Fig. 6 in Frage. Dabei werden die Bildinformationen auf einem Computerbildschirm 45 dargestellt, der auch die für etwaige Audioinformationen erforderlichen Lautsprecher enthält. Als Eingabegeräte sind - wie bei PCs üblich - eine Tastatur 46 und eine Maus 47 vorgesehen. Als Netzanbindung kann beispielsweise ein IP-basiertes LAN eingesetzt werden. Bei diesem Ausführungsbeispiel ist ein mit einer Schnittstelle 12 versehener Mini-Decoder 1' vorgesehen, damit - gegebenenfalls über ein geeignetes Zusatzmodul - weitere lokale Geräte, wie Drucker oder Scanner, angeschlossen werden können.

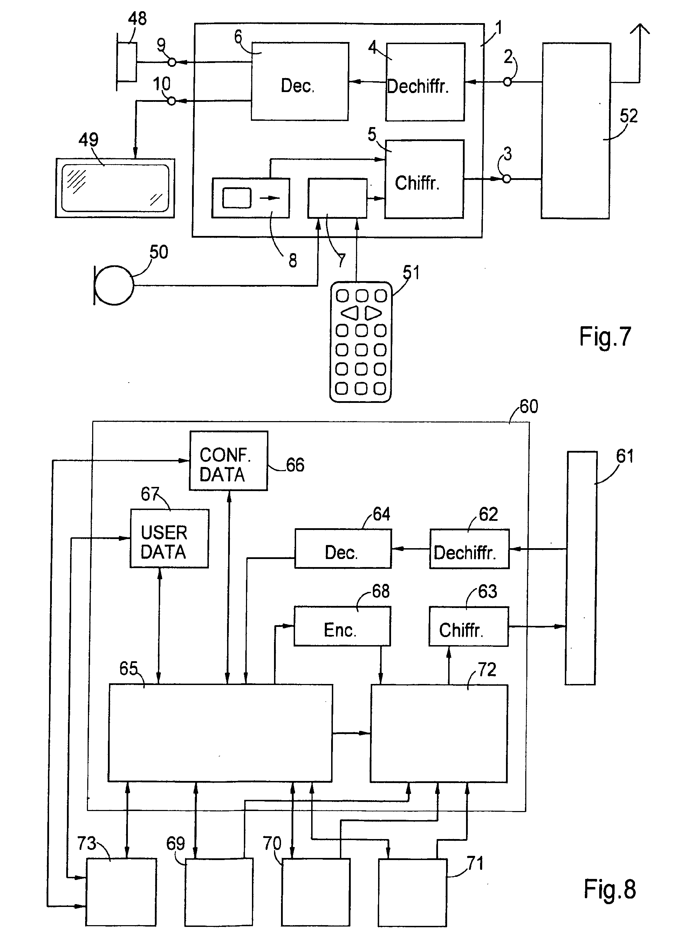

Der Mini-Decoder kann so kompakt realisiert werden, daß er in ein Mobiltelefon integriert werden kann, was in Fig. 7 schematisch dargestellt ist. Bei einer entsprechenden Absprache zwischen dem Betreiber des Mobilfunknetzes und des Mini-Decoder-Servers kann der Chipkartenleser 8 des Mini-Decoders 1 auch für die Authentifikation und Verschlüsselung im Mobilfunknetz genutzt werden. Die Steuerung des Mobiltelefons kann dabei über eine Tastatur oder durch Spracheingaben erfolgen.

Der Mini-Decoder 1 ist im Mobilfunkgerät mit einem Hörer 48, einem Display 49, einem Mikrofon 50, dem Bedienteil 51 und einer Sende/Empfangseinrichtung 52 verbunden. Mit einem gemäß Fig. 7 erweiterten Mobilfunkgerät kann eine erheblich erweiterte Nutzung erfolgen, insbesondere die Bereitstellung von in schriftlicher oder grafischer Form vorliegenden Informationen, wie beispielsweise E-Mail, Termine, kurze Notizen, Kontaktadressen, Abfragen nach aktuellen Zuständen, insbesondere der Verkehrssituation, und Börsenkurse. Durch den Zugang zum Mini-Decoder-Server lassen sich solche Dienste und Anwendungen ohne entsprechende Hard- oder Software im Mobiltelefon realisieren.

Fig . 8 zeigt schematisch eine mögliche Realisierung eines Servers 60, der über ein Telekommunikationsnetz 61 von Mini-Decodern erreichbar ist. Dieser Server wird im folgenden Mini-Decoder-Server genannt.

In ähnlicher Weise wie die Mini-Decoder ist der Mini-Decoder-Server 60 über eine Entschlüsselungseinrichtung 62 und eine Verschlüsselungseinrichtung 63 mit dem Telekommunikationsnetz 61 verbunden. An die Entschlüsselungseinrichtung 62 schließt sich ein Decoder 64 an, der die von den Mini-Decodern übertragenen Signale decodiert.

Jede Anmeldung eines Nutzers bei einem Mini-Decoder (z.B. durch Einstecken einer Chipkarte) aktiviert eine Anwendung 65 im Server, die den Zustand der auf die Anmeldung folgenden Nutzung des Systems (im folgenden Sitzung genannt) kontrolliert. Diese Anwendung (im folgenden Sitzungskontrolle genannt) ist solange aktiv, bis der Nutzer die Sitzung abbricht. Mögliche andere Gründe des Abbruchs einer Sitzung können unter anderem eine ausbleibende Reaktion des Nutzers auf mehrmalige Anforderung des Systems, eine Rückmeldung einzugeben, oder die Unterbrechung der Leitung zwischen Mini-Decoder und Mini-Decoder-Server sein.

Zu Beginn einer Sitzung prüft die Sitzungskontrolle die Zugangsberechtigung des Nutzers ab. Sie vergleicht die Daten, die der Nutzer über den Mini-Decoder meldet, mit Einträgen in einer Nutzerdatenbank (USER DATA, 67), in der Daten des Nutzers (PIN, Paßwörter) und Zugangsberechtigungen für verschiedene Dienste und Inhalte abgespeichert sind. Die Nutzerdatenbank kann weiterhin die persönliche Konfiguration von Diensten (einstellbar durch entsprechende Menüs des Basisnavigators) durch die Bereithaltung entsprechender Daten unterstützen.

Mit einem Dialog mit dem Mini-Decoder werden die Konfiguration des Mini-Decoders und die Eigenschaften der Netzanbindung ebenfalls zu Beginn der Sitzung abgefragt.

Dieser Dialog zwischen Mini-Decoder und Server ist unsichtbar für den Nutzer, zumindest so lange wie die Konfiguration des Mini-Decoders unverändert bleibt. Bei geänderter Gerätekonfiguration, die durch einen Vergleich mit der Konfigurationsdatenbank (CONF. DATA, 66) ermittelt wird, kann ein Dialog mit dem Nutzer zur Einstellung der neuen Möglichkeiten (z.B. nach Einfügen einer neuen Zusatzkarte am Interface) notwendig werden. Ähnliches gilt für eine Änderung der Netzanbindung des Mini-Decoders.

Ebenfalls zu Beginn der Sitzung wird eine Verbindung zu einer Anwendung des Rechnungswesens 73 aufgebaut. Diese Anwendung kommuniziert mit Nutzerdatenbank, Konfigurationsdatenbank und der Sitzungskontrolle. Sie stellt die Daten für eine spätere Rechnungsstellung bereit. Bei negativer Bonitätsprüfung zu Anfang der Sitzung und einem eventuellen Verzehr eines Guthabens während einer Sitzung kann diese Anwendung ebenfalls einen Abbruch der Sitzung veranlassen.

Nach erfolgreicher Anmeldung der Sitzung wird der (unter Umständen persönliche) Basisnavigator als Element der Sitzungskontrolle gestartet. Der Kunde kann jetzt einen Dienst aktivieren.

Die dann ausgewählten Dienste bzw. die damit verbundenen Rechneranwendungen (69, 70, 71 sind dafür als Beispiele in Fig. 8 vermerkt) können auf dem Mini-Decoder-Server ausgeführt werden, oder der Server baut dazu eine Verbindung zu einem oder mehreren anderen Rechnern (Anwendungsservern) auf. Die bereits codierten Daten der Anwendungen 69, 70, 71 werden im Mischer 72 des Mini-Decoder-Servers zu einer eventuellen Verschlüsselung in der Verschlüsselungseinheit 63 bereitgestellt.

Die Encodierungseinrichtung 68 kann dabei auch von den Anwendungen 69, 70, 71 genutzt werden, indem die Daten durch die Sitzungskontrolle 65 geleitet werden.

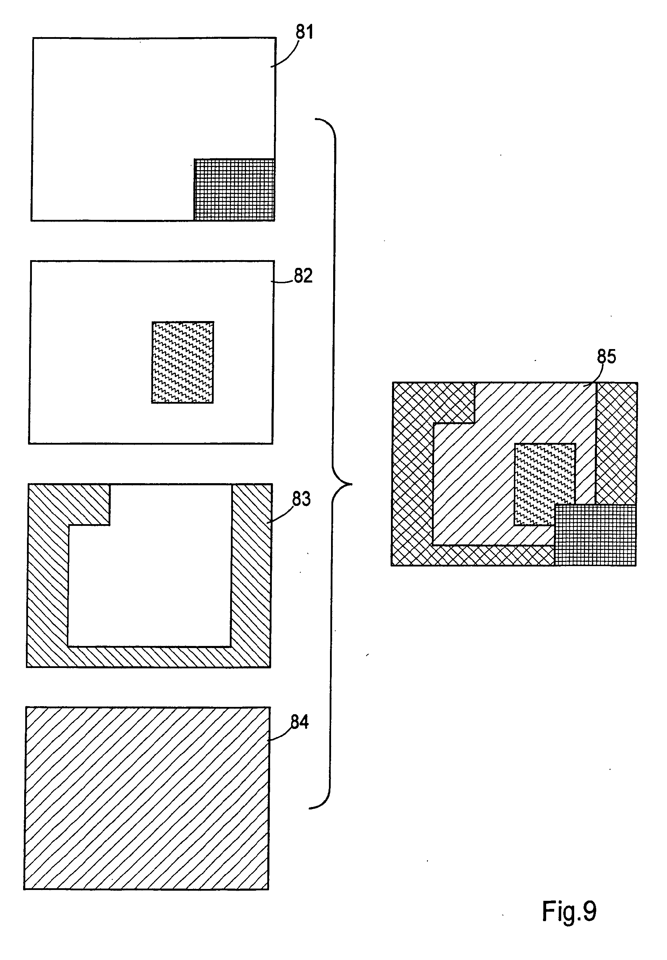

Wie später anhand von Fig. 9 erläutert wird, können einem Mini-Decoder durchaus Informationen mehrerer Anwendungen zugeführt werden, die dort in geeigneter Weise überlagert werden. Dazu werden diesen Informationen von der Sitzungskontrolle 65 Darstellungsebenen und gegebenenfalls Transparenzmerkmale zugewiesen. Befehle des Nutzers werden dabei von der Sitzungskontrolle 65 an die richtige Anwendung 69, 70 oder 71 weitergeleitet.

Um dem Benutzer eines Mini-Decoders gleichzeitig verschiedene Bildinformationen zukommenzulassen, ist eine Aufbereitung aller Bild- und Toninhalte zu einem resultierenden Signal in einem komplexen Mixerelement 72 des Mini-Decoder-Servers möglich, aber unter Umständen zu aufwendig für viele Nutzer.

Deshalb kann es zweckmäßig sein, das Mischen im Mini-Decoder mit entsprechend leistungsfähigen Mischern 11 und Decoderelementen 6 (Figuren 1 bis 7) vorzunehmen. Der Mischer fügt dann nicht nur den vom Server empfangenen Bildern interne Bildinformation (empfangen von Zusatzmodulen über das Interface 12) zu, sondern er setzt auch die Bildinformation der über den Mini-Decoder-Server gesteuerten Anwendungen zusammen. Dazu werden diese verschiedenen Bilder jeweils mit einer Information über die Darstellungsebene (ob sie im Vordergrund oder im Hintergrund erscheinen) versehen. Füllen die Anwendungen nur Teilflächen des Gesamtbildes und ist der Rest als transparent definiert, können komplexe Bildkompositionen entstehen, wie an einem Beispiel in Fig. 9 erläutert.

Bei diesem Beispiel (Fig. 9) werden Informationen von vier verschiedenen Anwendungen quasi gleichzeitig einem Mini-Decoder zugeführt. (Genau genommen erfolgt die Datenübertragung dabei zeitversetzt und die Bilder werden in flüchtigen Zwischenspeichern vorbereitet und vorgehalten, bis sie gemeinsam synchron dargestellt werden.) Im Beispiel wird der Inhalt des Bildes 81 in der vordersten, der Inhalt des Bildes 82 in der darauffolgenden Ebene, der Inhalt des Bildes 83 in der dritten und der Inhalt des Bildes 84 in der vierten Ebene dargestellt. Wieviele Ebenen der Mini-Decoder decodieren und verwalten kann, hängt von seiner Ausführung ab und wird vom Server in der Konfigurationsdatenbank festgehalten.

Das in Fig. 9 gezeigte Bildszenario könnte dabei von den in der folgenden Tabelle gelisteten Anwendungen verursacht sein. Die in der Tabelle angegebene Codierung ist ebenfalls nur ein Beispiel für die Verwendung verschiedener Codierungsstandards.

| Bild | Inhalt | Daten | Codierung | Ton |
|---|---|---|---|---|
| 81 | E-Mail-Meldung | Bild | JPEG | kurze Sequenz |
| 82 | Bild des Partners bei Videotelefonie | Video | H323 | ja |
| 83 | Zusatzinformation zum Fernsehprogramm | Bild | JPEG | - |
| 84 | Fernsehprogramm | Video | MPEG | ja |

Ferner zeigt Fig. 9 das zusammengesetzte Bild 85, wobei die Schraffur der Einzelbilder und des Gesamtbildes derart gewählt wurde, daß mit von vorn weiterschreitender Betrachtungsebene die Schraffur weniger dicht ist. Außerdem ist die Transparenz des Bildes 83 im Bild 85 durch Einbeziehung der Schraffur des Fernsehbildes gekennzeichnet. Durch geeignete Bedieneingaben kann der Benutzer die einzelnen Bilder ein- bzw. ausblenden, beispielsweise die Meldung einer E-Mail nach deren Wahrnehmung wieder ausblenden. Ebenso wird das Bild 82 einer Video-Telefon-Verbindung nach deren Auslösung entfernt.

Der Mini-Decoder kann dabei eine entsprechende Mischung der Tonsignale vornehmen, die der Nutzer vom Basisnavigator unterstützt einstellen kann.

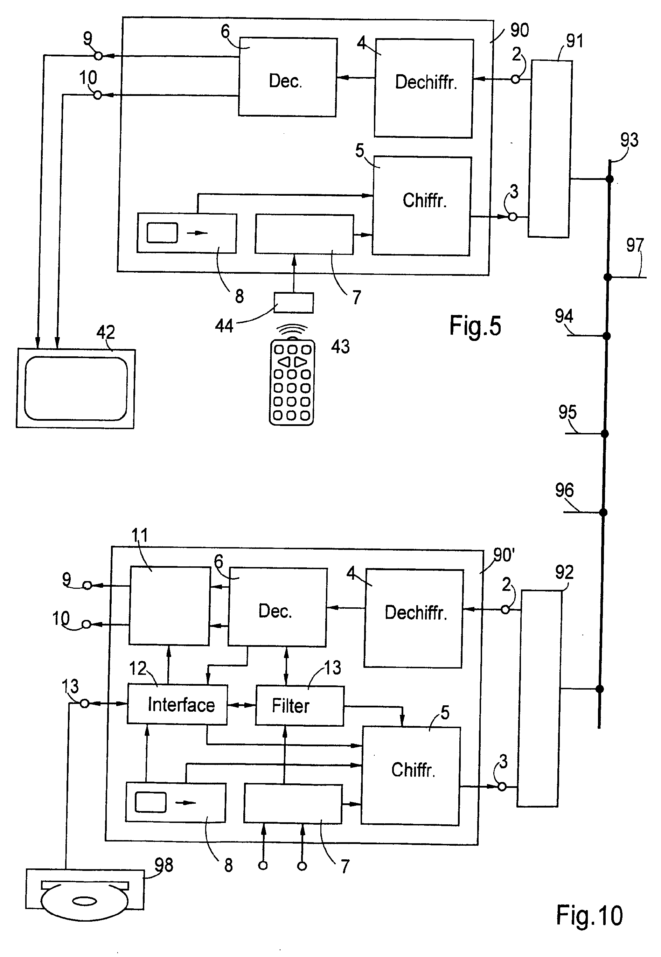

Fig. 10 zeigt ein Beispiel dafür, daß mehrere Mini-Decoder durch ein Hausnetz miteinander verbunden werden können, wobei sich weitere Vorteile ergeben. Mit dem Hausnetz kommunizieren die Mini-Decoder über ihre Netzschnittstellen 2 und 3 und den Schnittstellen des Hausnetzes, z.B. 91, 92, 94, 95, 96. Das Hausnetz ist mit dem Kommunikationsnetz und dem Mini-Decoder-Server über die Schnittstelle 97 verbunden. Ist das Hausnetz 93 mit einer steuerbaren Verteilfunktionalität, z.B. durch einen programmierbaren Schalter oder Verteiler, ausgestattet, so kann diese von einem Mini-Decoder direkt oder über den Mini-Decoder-Server so gesteuert werden, daß Daten eines Mini-Decoders (Sender) einem zweiten Mini-Decoder (Empfänger) im Hausnetz zur Verfügung gestellt werden, wobei der Datenfluß des Senders vom Empfänger gesteuert werden kann. Hat das Hausnetz keine Verteilfunktionalität, so kann die Kommunikation zwischen sendendem und empfangendem Mini-Decoder über den Mini-Decoder-Server abgewickelt werden. Die Eigenschaften des Hausnetzes können dabei vom Mini-Decoder-Server in der Konfigurationsdatenbank 66 verwaltet werden.

Die Mini-Decoder 90, 90' sind in Fig. 10 ähnlich den in den Figuren 1 und 2 dargestellten aufgebaut. Der Mini-Decoder 90' ist mit einem DVD-Player 98 als Zusatzmodul verbunden. Ein Benutzer des Mini-Decoders 90 mit angeschlossenen Fernsehgerät 42 kann sich somit einen Film auf einer DVD ansehen, wenn an anderer Stelle im Haus diese in den dortigen DVD-Player eingelegt wird. Somit sind über das Hausnetz viele Nutzungsarten möglich, auch wenn nicht alle angeschlossenen Mini-Decoder vollständig mit Zusatzmodulen ausgerüstet sind.

Der Eigentümer eines Mini-Decoders kann mit dem Betreiber des Mini-Decoder-Servers vereinbaren, daß er bestimmte an das Hausnetz angeschlossene Geräte von außerhalb fernsteuern kann. Das können z.B. Mini-Decoder sein mit einem Kameramodul nach Fig. 3, das zur Raumüberwachung, z.B. zur Kinderbeaufsichtigung, benutzt werden kann. Weitere an das Hausnetz angeschlossene Einheiten, wie z.B. eine Heizungsanlage oder eine Alarmanlage, die eine Raumüberwachung mit einem entsprechenden Mini-Decoder-Modul veranlasst, könnten von sich aus Meldungen an den Mini-Decoder-Server schicken oder über den Mini-Decoder-Server von außen ferngesteuert werden.

Fig. 10 zeigt ein Beispiel dafür, daß mehrere Mini-Decoder durch ein Hausnetz miteinander verbunden werden können, wobei sich weitere Vorteile ergeben. Dazu sind die Mini-Decoder 90, 90' mit jeweils einer Schnittstelle 91, 92 versehen, die an ein Bus-System 93 angeschlossen ist. Bei 94, 95, 96 können weitere Mini-Decoder angeschlossen werden, während bei 97 der Anschluß an ein Kommunikationsnetz möglich ist.

Die Mini-Decoder 90, 90' sind ähnlich denen in den Figuren 1 und 2 dargestellten aufgebaut, wobei jedoch hier ein Ausführungsbeispiel für den Mini-Decoder gewählt wurde, bei dem keine Ver- und Entschlüsselungseinrichtung und kein Chipkartenleser vorgesehen sind. Dieses kann nicht nur für an Hausnetze angeschlossene Mini-Decoder vorteilhaft sein, sondern ist auch bei geringerem Bedarf an Sicherheit gegen Mißbrauch bei öffentlichen Telekommunikationsnetzen möglich oder bei Telekommunikationsnetzen, die bereits einen ausreichend hohen Grad an Sicherheit gewährleisten.

Der Mini-Decoder 90' ist mit einem DVD-Player 98 als Zusatzmodul verbunden. Ein Benutzer des Mini-Decoders 90 mit dem angeschlossenen Fernsehgerät 42 kann sich somit einen Film auf einer DVD ansehen, wenn diese in den DVD-Player 98 eingelegt wird. Somit sind über das Hausnetz viele Nutzungsarten möglich, auch wenn nicht alle angeschlossenen Mini-Decoder vollständig mit Zusatzmodulen ausgerüstet sind.

## Patentansprüche

1. Endgerät zur Nutzung verschiedener über ein Telekommunikationsnetz angebotener Dienste, **gekennzeichnet durch**
- mindestens eine Empfangseinrichtung (2, 4) für Bild- und Toninformationen,
- mindestens eine Sendeeinrichtung (3, 5) für Daten, welche zur Auswahl der empfangenen Bild- und Toninformationen dienen,
- eine Eingabeeinrichtung (7),
- einen Decoder (6) für die Bild- und Toninformationen und
- Ausgänge (9, 10) für Audio- und Videosignale.

2. Endgerät nach Anspruch 1, **dadurch gekennzeichnet, daß** ferner ein Lesegerät (8) für bewegliche Datenträger, insbesondere zur Eingabe von Sicherheitscodes, vorgesehen ist.

3. Endgerät nach Anspruch 1, **dadurch gekennzeichnet, daß** eine Erkennungseinrichtung für Sicherheitsmerkmale, insbesondere Fingerabdruck oder Irisbild, vorgesehen ist.

4. Endgerät nach einem der vorhergehenden Ansprüche, **dadurch gekennzeichnet, daß** die Empfangseinrichtung eine Entschlüsselungseinrichtung (4) und die Sendeeinrichtung eine Verschlüsselungseinrichtung (5) enthält.

5. Endgerät nach Anspruch 4, **dadurch gekennzeichnet, daß** der Decoder (6) für die Bild- und Toninformationen der Entschlüsselungseinrichtung (4) nachgeschaltet ist und daß ferner zusammen mit den Bild- und Toninformationen übertragene Programm- und Steuerinformationen auswertbar sind.

6. Endgerät nach einem der vorhergehenden Ansprüche, **gekennzeichnet durch** eine Schnittstelle (12) (Interface) zum Anschluß mindestens eines Zusatzgerätes, wobei die Schnittstelle Daten aus dem Decoder (6) und dem Leser (8) empfangen und Daten an die Sendeeinrichtung (5) und an einen im Weg der decodierten Bild- und Toninformationen liegenden Mischer (11) senden kann.

7. Endgerät nach Anspruch 6, **dadurch gekennzeichnet, daß** eine von dem Decoder (6) und der Eingabeeinrichtung (7) steuerbare Filteranordnung (13) vorgesehen ist, die mit der Schnittstelle (12), dem Decoder (13) und mit der Sendeeinrichtung (5) verbunden ist.

8. Endgerät nach einem der vorhergehenden Ansprüche, **dadurch gekennzeichnet, daß** ein Ringspeicher zur Wiederholung von Video- und/oder Audiosequenzen vorgesehen ist.

9. Endgerät nach einem der vorhergehenden Ansprüche, **dadurch gekennzeichnet, daß** die Eingabeeinrichtung (7) Anschlüsse für verschiedene Eingabegeräte, insbesondere eine Tastatur (46), ein Zeigegerät (47) oder ein Mikrofon zur Sprachsteuerung, aufweist.

10. Endgerät nach einem der vorhergehenden Ansprüche, **dadurch gekennzeichnet, daß** die Eingabeeinrichtung einen Infrarot- oder Funkempfänger (44) aufweist.

11. Endgerät nach einem der Ansprüche 6 bis 10, **dadurch gekennzeichnet, daß** das Zusatzgerät (21) je einen Coder (23, 24) und Eingänge (25, 26) für Video- und für Audiosignale aufweist.

12. Endgerät nach einem der Ansprüche 6 bis 10, **dadurch gekennzeichnet, daß** das Zusatzgerät (31) im wesentlichen einen Empfangsteil (32) für Fernseh-Rundfunk, eine Entschlüsselungseinrichtung (33) und einen Decoder (34) enthält.

13. Endgerät nach Anspruch 12, **dadurch gekennzeichnet, daß** das Zusatzgerät einen weiteren Leser (36) für Datenträger, insbesondere einen Chipkarten-Leser, enthält.

14. Endgerät nach einem der vorhergehenden Ansprüche, **dadurch gekennzeichnet, daß** über die Empfangseinrichtung (4) Daten empfangbar sind, welche Algorithmen zur Decodierung der Bild- und Toninformationen enthalten und die in dem Endgerät mindestens flüchtig gespeichert werden und in dem Decoder (6) zur Decodierung der darauffolgend erhaltenen Bild- und Toninformationen anwendbar sind.

15. Endgerät nach einem der vorhergehenden Ansprüche, **dadurch gekennzeichnet, daß** es in ein Mobiltelefon integriert ist und daß die Videosignale dem Display (49) des Mobiltelefons zuführbar sind und die Eingabeeinrichtung mit der Eingabeeinrichtung des Mobiltelefons (51) verbunden ist.

16. Endgerät nach einem der Ansprüche 1 bis 14, **dadurch gekennzeichnet, daß** es in einen Fernsehempfänger integriert ist.

17. Endgerät nach einem der Ansprüche 1 bis 14, **dadurch gekennzeichnet, daß** es in einen Videomonitor integriert ist.

18. Endgerät nach einem der vorhergehenden Ansprüche, **dadurch gekennzeichnet, daß** es einen Bild- und/oder Tonmischer (11) enthält, der die empfangenen Bild- und/oder Toninformationen mehrerer Bilder und/oder Tonereignisse zusammenfügt.

19. Endgerät nach Anspruch 18, **dadurch gekennzeichnet, daß** Prioritäten beim Zusammenfügen der Bilder und/oder Tonereignisse durch mit den Bildern und/oder Tonereignisse empfangene Daten gesteuert werden.

20. Endgerät nach Anspruch 19, **dadurch gekennzeichnet, daß** ferner die Prioritäten und die Darstellung der Bilder und/oder Tonereignisse von Bedieneingaben am Endgerät abhängig sind.

21. Server für Endgeräte nach einem der vorhergehenden Ansprüche, **gekennzeichnet durch**
- Einrichtungen (62, 63) zur Verbindung mit einem Telekommunikationsnetz (60),
- Einrichtungen (66, 67) zur Berechtigungsprüfung anhand der jeweils von einem Endgerät empfangenen Daten und
- Einrichtungen (65, 68) zur Entgegennahme und Verarbeitung von Diensteanforderungen der Endgeräte.

22. Server nach Anspruch 21, **dadurch gekennzeichnet, daß** ferner Einrichtungen (65) zur Weiterleitung von Diensteanforderungen an mindestens einen Anwendungsserver und Einrichtungen (72) zur Weiterleitung von Daten des mindestens einen Anwendungsservers (69, 70, 71) an Endgeräte vorgesehen sind.

23. Server nach einem der Ansprüche 21 oder 22, **dadurch gekennzeichnet, daß** er eine Fernsteuerung (An/Aus-Schalten, Datenaustausch) von Zusatzmodulen an Endgeräten nach einem der Ansprüche 6 bis 20 erlaubt.
